# EUROPEAN PATENT APPLICATION

(11) **EP 4 661 118 A1**
(43) Date of publication of application: **10.12.2025**
(21) Application number: 24179990.7
(22) Date of filing: 04.06.2024
(51) Int. Cl.: H01M 8/0267, H01M 8/04029, H01M 8/10

(54) **A METHOD AND DEVICE FOR FILLING A COOLANT TO A COOLANT CIRCUIT OF A FUEL CELL SYSTEM**

(71) Applicant: VOLVO TRUCK CORPORATION, 405 08 Göteborg (SE)
(72) Inventor: Jemt, Katarina, 416 56 Göteborg (SE); Nilsson, Christian, 417 43 Göteborg (SE); Groff, Adam, 417 12 Göteborg (SE); Arya, Pranav, 412 85 Göteborg (SE)
(74) Representative: Kransell & Wennborg KB

(57) **Abstract**

The disclosure relates to a method for filling a coolant to a coolant circuit (2) of a fuel cell system (1), the method comprising:
- filling (S1) coolant to the coolant circuit (2),
- during filling coolant to the coolant circuit (2), controlling (S2) a fluid pressure in at least one gas path (41, 42) of a fuel cell stack (3) of the fuel cell system (1). The disclosure also relates to a device (100) for filling a coolant to a coolant circuit (2) of a fuel cell system (1), to a fuel cell system (1) and to a vehicle (200)

## Description

### TECHNICAL FIELD

The disclosure relates generally to fuel cell systems. In particular aspects, the disclosure relates to a method and a device for filling a coolant to a coolant circuit of a fuel cell system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Fuel cells and fuel cell systems may be used for generating power, such as power for driving a vehicle. A fuel cell is an electrochemical cell which converts chemical energy into electricity. The fuel cell converts the chemical energy of a fuel, typically hydrogen, and an oxidizing agent, typically oxygen, into electricity. Accordingly, a fuel cell can be used as an alternative or as a complement to electric batteries. In recent years fuel cells have been considered for powering electric vehicles, such as pure electric vehicles and hybrid electric vehicles.

Typically, a fuel cell system comprises a fuel cell stack which comprises one or more fuel cells which are arranged next to each other. The fuel cell system may comprise a turbo and a humidifier. The fuel cell system may also comprise a coolant circuit with a coolant path in the fuel cell stack. The coolant circuit comprises a coolant.

There is a strive to provide improved technology relating to fuel cell systems having a coolant circuit.

### SUMMARY

According to a first aspect of the disclosure, there is provided a method for filling a coolant to a coolant circuit of a fuel cell system. The fuel cell system comprises a fuel cell stack and the fuel cell stack comprises a plurality of bipolar plates and at least one membrane located between two adjacent bipolar plates of the plurality of bipolar plates. The plurality of bipolar plates form a coolant path of the coolant circuit and at least one gas path is formed between the at least one membrane and a bipolar plate of the plurality of bipolar plates. The method comprises:
- filling coolant to the coolant circuit,
- during filling coolant to the coolant circuit, controlling a fluid pressure in the at least one gas path. The first aspect of the disclosure may seek to improve filling of coolant to the coolant circuit. A technical benefit may include that by controlling the pressure in the at least one gas path during filling of coolant, the risk of damaging the parts of the fuel cell stack may be reduced. Additionally, or alternatively, a technical benefit may include that by controlling the pressure in the at least one gas path during filling of coolant, the time required for filling the coolant circuit may be reduced.

Filling of coolant as used herein means that coolant is added to the coolant circuit of the fuel cell system from an external source separate from the fuel cell system, e.g., from an external tank storing coolant, wherein the external tank is separate from the fuel cell system. The action of filling of coolant to the coolant circuit may mean that coolant is filled until the coolant circuit has reached a fill level which is indicative of a full coolant circuit. Additionally, or alternatively, filling of coolant to the coolant circuit may mean that coolant is filled until the coolant circuit has reached a fill level which is indicative of a partially full coolant circuit. In other words, filling of coolant may be performed to any fill level, not only to a full fill level.

Optionally in some examples, including in at least one preferred example, controlling the fluid pressure in the at least one gas path comprises increasing the fluid pressure in the at least one gas path and/or decreasing the fluid pressure in the at least one gas path. A technical benefit may include that the time for filling the coolant circuit may be reduced, and/or the risk of damaging any one of the bipolar plates may be reduced.

Optionally in some examples, including in at least one preferred example, the fluid pressure in the at least one gas path is increased in response to a detected increased fluid pressure in the coolant path and/or decreased in response to a detected decreased fluid pressure in the coolant path. A technical benefit may include improved and more adapted control of the fluid pressure in the at least one gas path. This may result in a further reduced time required for filling the coolant circuit, and/or a further reduced risk of damaging any one of the bipolar plates.

Optionally in some examples, including in at least one preferred example, the at least one gas path comprises a fuel path and an oxidant path, wherein controlling the fluid pressure in the at least one gas path comprises controlling the fluid pressure in at least one, preferably each one, of the fuel path and the oxidant path. A technical benefit may include a further reduced time required for filling the coolant circuit, and/or a further reduced risk of damaging any one of the bipolar plates. For example, by controlling the fluid pressure in each one of the fuel path and the oxidant path, the risk of a too low or too high fluid pressure in one of the fuel path and the oxidant path during filling of coolant may be reduced.

Optionally in some examples, including in at least one preferred example, controlling the fluid pressure in the at least one gas path comprises feeding a gas to the at least one gas path and/or removing a gas from the at least one gas path. A technical benefit may include a cost-effective and/or reliable procedure of controlling the fluid pressure in the at least one gas path.

Optionally in some examples, including in at least one preferred example, the gas fed to the at least one gas path is an inert gas, such as nitrogen or helium, or a mixture thereof. A technical benefit may include a reliable and robust procedure of controlling the fluid pressure in the at least one gas path, e.g., mitigating the risk of any unwanted chemical reaction with the bipolar plates or the at least one membrane.

Optionally in some examples, including in at least one preferred example, the coolant path is at least partly provided on a first side of a first bipolar plate of the plurality of bipolar plates and the at least one gas path is at least partly provided on a second side of the first bipolar plate, the second side being an opposite side to the first side, and wherein controlling the fluid pressure in the at least one gas path comprises controlling the fluid pressure in the at least one gas path such that a differential pressure, being the difference between the fluid pressure in the coolant path provided on the first side and the fluid pressure in the at least one gas path provided on the second side, is below a differential pressure threshold. A technical benefit may include that further improved control of the fluid pressure is enabled, mitigating the risk of damaging the first bipolar plate during filling of coolant. For example, it has been realized that the bipolar plates may be damaged if the differential pressure is too high during filling of coolant. Accordingly, by way of example, a higher filling pressure of the coolant circuit may be allowed if also the differential pressure is below the differential pressure threshold.

Optionally in some examples, including in at least one preferred example, a procedure of filling coolant to the coolant circuit firstly comprises generating a first fluid pressure in the coolant path which is lower than an ambient pressure, followed by filling coolant to the coolant circuit at a second fluid pressure in the coolant path which is higher than the ambient pressure. A technical benefit may include an improved procedure of filling coolant, e.g., mitigating the risk of air bubbles in the coolant after it has been filled to the coolant circuit. For example, by lowering the fluid pressure to a level below the ambient pressure, unwanted gas, such as air, may be removed from the coolant circuit before the coolant is added. The ambient pressure may be an atmospheric pressure, such as an atmospheric pressure at a ground level, or sea level, such as 1 bar. In addition, by filling coolant to the coolant circuit at the second fluid pressure, the time required for filling coolant may be reduced.

Optionally in some examples, including in at least one preferred example, controlling the fluid pressure in the at least one gas path comprises controlling the fluid pressure in the at least one gas path in dependence on the second fluid pressure in the coolant path. A technical benefit may include that the risk of damaging the bipolar plates is mitigated. For example, it has been realized that the bipolar plates are more sensitive to over-pressures, i.e. pressures higher than the ambient pressure, when filling coolant to the coolant circuit.

Optionally in some examples, including in at least one preferred example, controlling the fluid pressure in the at least one gas path comprises ensuring that the fluid pressure in the at least one gas path is at the ambient pressure when there is a fluid pressure in the coolant path which is lower than the ambient pressure. A technical benefit may include a more cost-effective procedure of filling coolant to the coolant circuit, e.g., without a need to actively control the fluid pressure in the at least one gas path when there is a fluid pressure in the coolant path which is lower than the ambient pressure.

Optionally in some examples, including in at least one preferred example, controlling the fluid pressure in the at least one gas path comprises ensuring that the fluid pressure in the at least one gas path is below the ambient pressure when there is a fluid pressure in the coolant path which is lower than the ambient pressure. A technical benefit may include that the risk of damaging the bipolar plates is mitigated. A technical benefit may additionally or alternatively include that the pressure level in the coolant path can be lowered even further such that the risk of air bubbles in the coolant path is further reduced.

Optionally in some examples, including in at least one preferred example, the method further comprises obtaining information indicative of a fluid pressure level in the at least one gas path and/or indicative of a fluid pressure level in the coolant path. A technical benefit may include that the control of the fluid pressure in the at least one gas path can be improved during filling of coolant, such that e.g. the fluid pressure in the at least one gas path is kept within a specific pressure range during filling of coolant.

Optionally in some examples, including in at least one preferred example, the obtained information is received from at least one pressure sensor of the fuel cell system, and/or the obtained information is received from at least one pressure sensor of a device for filling the coolant to the coolant circuit of the fuel cell system. A technical benefit of using at least one pressure sensor of the fuel cell system may include a more reliable measurement of the pressure(s). Additionally, or alternatively, a technical benefit of using at least one pressure sensor of the fuel cell system may include a cost-effective measurement, e.g., by using already available pressure sensors. A technical benefit of using at least one pressure sensor of the device may include an effective measurement of the pressure(s) with a reduced need of using sensor information from the fuel cell system.

According to a second aspect of the disclosure, there is provided a device for filling a coolant to a coolant circuit of a fuel cell system. The fuel cell system comprises a fuel cell stack and the fuel cell stack comprises a plurality of bipolar plates and at least one membrane located between two adjacent bipolar plates of the plurality of bipolar plates. The plurality of bipolar plates form a coolant path of the coolant circuit and at least one gas path is formed between the at least one membrane and a bipolar plate of the plurality of bipolar plates. The device comprises a first conduit fluidly connectable to the coolant circuit, and a second conduit fluidly connectable to the at least one gas path. The device is configured to, when the first conduit is fluidly connected to the coolant circuit and the second conduit is fluidly connected to the at least one gas path:
- fill coolant to the coolant circuit via the first conduit, and
- during filling coolant to the coolant circuit, control a fluid pressure in the at least one gas path via the second conduit. The second aspect of the disclosure may seek to provide a device which enables improved filling of coolant to the coolant circuit. Technical benefits and advantages of the second aspect of the disclosure are analogous to the technical benefits and advantages of the first aspect of the disclosure. It shall also be noted that all examples of the first aspect of the disclosure are combinable with all examples of the second aspect of the disclosure, and vice versa.

Optionally in some examples, including in at least one preferred example, the device is configured to control the fluid pressure in the at least one gas path via the second conduit by increasing the fluid pressure in the at least one gas path and/or by decreasing the fluid pressure in the at least one gas path. A technical benefit may include that the time required for filling the coolant circuit by the device may be reduced, and/or the risk of damaging any one of the bipolar plates may be reduced.

Optionally in some examples, including in at least one preferred example, the device is configured to increase the fluid pressure in the at least one gas path in response to a detected increased fluid pressure in the coolant path and/or decrease the fluid pressure in the at least one gas path in response to a detected decreased fluid pressure in the coolant path. A technical benefit may include that the device provides improved and more adapted control of the fluid pressure in the at least one gas path. This may result in a further reduced time required for filling the coolant circuit, and/or a further reduced risk of damaging any one of the bipolar plates.

Optionally in some examples, including in at least one preferred example, the at least one gas path comprises a fuel path and an oxidant path, and the second conduit is fluidly connectable to the fuel path and/or to the oxidant path, and the device is configured to control the fluid pressure in at least one, preferably each one, of the fuel path and the oxidant path via the second conduit. A technical benefit may include a further reduced time required for filling the coolant circuit by the device, and/or a further reduced risk of damaging any one of the bipolar plates. For example, by controlling the fluid pressure in each one of the fuel path and the oxidant path, the risk of a too low or a too high fluid pressure in one of the fuel path and the oxidant path may be reduced.

Optionally in some examples, including in at least one preferred example, the device is configured to control the fluid pressure in the at least one gas path via the second conduit by feeding a gas to the at least one gas path. A technical benefit may include that the device provides a cost-effective and/or reliable procedure of controlling the fluid pressure in the at least one gas path. Optionally in some examples, including in at least one preferred example, the device is configured to control the fluid pressure in the at least one gas path via the second conduit by removing a gas from the at least one gas path, e.g., when there is a pressure below the ambient pressure in the coolant path.

Optionally in some examples, including in at least one preferred example, the device is configured to fill coolant to the coolant circuit via the first conduit by a procedure of firstly generating a first fluid pressure in the coolant path which is lower than an ambient pressure, followed by filling coolant to the coolant circuit at a second fluid pressure in the coolant path which is higher than the ambient pressure. A technical benefit may include that the device provides an improved procedure of filling coolant, e.g., mitigating the risk of air bubbles in the coolant circuit.

Optionally in some examples, including in at least one preferred example, the device is configured to control the fluid pressure in the at least one gas path via the second conduit in dependence on the second fluid pressure in the coolant path. A technical benefit may include a reduced risk of damaging the bipolar plates.

Optionally in some examples, including in at least one preferred example, the device is configured to control the fluid pressure in the at least one gas path via the second conduit by ensuring that the fluid pressure in the at least one gas path is at the ambient pressure when there is a fluid pressure in the coolant path which is lower than the ambient pressure. A technical benefit may include that the device provides a more cost-effective procedure of filling coolant to the coolant circuit, e.g., without a need to actively control the fluid pressure in the at least one gas path when there is a fluid pressure in the coolant path which is lower than the ambient pressure.

Optionally in some examples, including in at least one preferred example, the device is configured to control the fluid pressure in the at least one gas path via the second conduit by ensuring that the fluid pressure in the at least one gas path is below the ambient pressure when there is a fluid pressure in the coolant path which is lower than the ambient pressure. A technical benefit may include that the risk of damaging the bipolar plates is mitigated. A technical benefit may additionally or alternatively include that the pressure level in the coolant path can be lowered even further such that the risk of air bubbles in the coolant path is further reduced.

Optionally in some examples, including in at least one preferred example, the device is further configured to obtain information indicative of a fluid pressure level in the at least one gas path and/or indicative of a fluid pressure level in the coolant path. A technical benefit may include that the control of the fluid pressure by the device in the at least one gas path can be improved during filling of coolant, such that e.g. the fluid pressure in the at least one gas path is kept within a specific pressure range during filling of coolant.

Optionally in some examples, including in at least one preferred example, the obtained information is at least partly received from at least one pressure sensor of the fuel cell system, and/or the obtained information is at least partly received from at least one pressure sensor of the device which is arranged to measure a pressure in the first and/or second conduit. A technical benefit of using at least one pressure sensor of the fuel cell system may include a more reliable measurement of the pressure(s). Additionally, or alternatively, a technical benefit of using at least one pressure sensor of the fuel cell system may include a cost-effective measurement, e.g., by using already available pressure sensors. A technical benefit of using at least one pressure sensor of the device may include an effective measurement of the pressure(s) with a reduced need of using sensor information from the fuel cell system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary fuel cell stack in a sectional view according to an example.
**FIG. 3** is an exemplary bipolar plate in a sectional view according to an example.
**FIG. 4** is a flowchart of a method according to an example.
**FIG. 5** is an exemplary fuel cell system and device according to an example.
**FIG. 6** is a schematic diagram of an exemplary computer system for implementing examples disclosed herein, according to an example.

The drawings are not necessarily drawn to scale. It shall also be noted that some details in the drawings may be exaggerated in order to better describe and illustrate the particular example. Like reference characters refer to like elements throughout the description, unless expressed otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

The present disclosure may seek to provide an improved method and/or device for filling a coolant to a coolant circuit of a fuel cell system which at least partially alleviate one or more drawbacks of the prior art, or which at least provide suitable alternatives. By the method and/or device as disclosed herein, the time required for filling coolant may be reduced and/or the risk of damaging sensitive parts of the fuel cell system may be reduced. For example, by the method and/or device as disclosed herein, a higher filling pressure of the coolant circuit may be allowed, thereby reducing the time required for filling the coolant circuit with coolant.

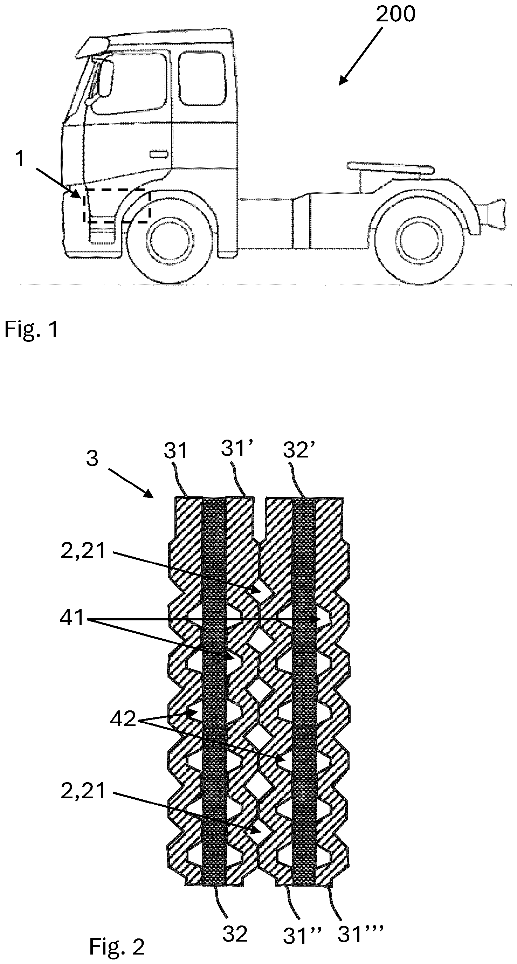

**FIG. 1** is an exemplary vehicle 200 in a side view according to an example. In this example, the vehicle 200 is a towing truck for towing one or more trailers (not shown). The vehicle 200 comprises a fuel cell system 1 which is arranged to generate propulsion power for the vehicle 200. Even though a truck is depicted, it shall be noted that the fuel cell system 1 as disclosed herein may be used in any type of vehicle, such as a bus, construction equipment, a passenger car and a marine vessel. The fuel cell system 1 may also be used in stationary machinery.

**FIG. 2** is an exemplary fuel cell stack 3 in a sectional view according to an example. The fuel cell stack 3 may for example be part of the fuel cell system 1 as shown in FIG. 1. The fuel cell stack 3 comprises a plurality of bipolar plates 31-31‴ and at least one membrane 32-32' located between two adj acent bipolar plates of the plurality of bipolar plates 31-31‴. In the shown example, two membranes 32, 32' and four bipolar plates 31, 31', 31", 31‴ are depicted. However, a fuel cell stack typically comprises tens or hundreds of bipolar plates and a related number of membranes.

As shown in FIG. 2, the plurality of bipolar plates 31-31‴ form a coolant path 21 of a coolant circuit 2 and at least one gas path 41, 42 is formed between the at least one membrane 32-32' and a bipolar plate of the plurality of bipolar plates 31-31‴. As shown, two adjacent bipolar plates 31', 31" may form the coolant path 21.

The bipolar plates 31-31‴ may be made of different types of material, such as but not limited to metal, coated metal, graphite, carbon-polymer composites etc. The membrane(s) may be any type of membrane for a fuel cell, such as but not limited to a proton-exchange membrane (PEM).

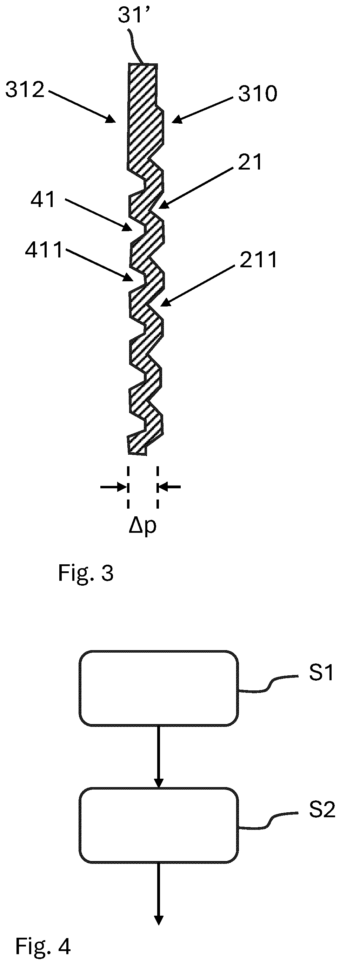

**FIG. 3** is an exemplary bipolar plate 31' in a sectional view according to an example. For example, the bipolar plate 31' in FIG. 3 may be the bipolar plate 31' in FIG. 2.

The bipolar plate 31' may as shown be configured such that recesses 411, 211 are formed on a first side 310 and on a second side 312, respectively, wherein the second side 312 is an opposite side to the first side 310. The recesses 411, 211 at least partly form the coolant path 21 and/or the at least one gas path 41, 42. As shown, the bipolar plate 31' may be formed in a zigzag pattern, as seen in the sectional view.

**FIG. 4** is a flowchart of a method according to an example of the first aspect of the disclosure.

With reference to e.g. FIGS. 2-4, the method comprises:
S1: filling coolant to the coolant circuit, and
S2: during filling coolant to the coolant circuit 2, controlling a fluid pressure in the at least one gas path 41, 42.

The actions S1 and S2 are hence at least partly performed concurrently.

Controlling the fluid pressure in the at least one gas path 41, 42 may comprise increasing the fluid pressure in the at least one gas path 41, 42. Additionally, or alternatively, controlling the fluid pressure in the at least one gas path 41, 42 may comprise decreasing the fluid pressure in the at least one gas path 41, 42

The fluid pressure in the at least one gas path 41, 42 may be increased in response to a detected increased fluid pressure in the coolant path 21. Additionally, or alternatively, the fluid pressure in the at least one gas path 41, 42 may be decreased in response to a detected decreased fluid pressure in the coolant path 21. Accordingly, in some examples, the method may be performed in a control loop using feedback. Hence, the feedback may at least partly be a detected fluid pressure in the coolant path 21.

As shown in FIG. 2, the at least one gas path 41, 42 typically comprises a fuel path 42 and an oxidant path 41. For example, the fuel for the fuel path 42 may be hydrogen and the oxidant for the oxidant path 41 may be oxygen. Controlling the fluid pressure in the at least one gas path 41, 42 may comprise controlling the fluid pressure in at least one, preferably each one, of the fuel path 42 and the oxidant path 41. As shown, a fluid pressure in the coolant path 21 will result in an exerted pressure on each one of the two adjacent bipolar plates 31', 31" which form the coolant path 21. Hence, if the fluid pressure is controlled in the fuel path 42 and in the oxidant path 41 which are formed by the bipolar plate 31" and 3 1', respectively, the risk of damaging the two adjacent bipolar plates 3 1', 31" may be reduced.

Controlling the fluid pressure in the at least one gas path 41, 42 may comprise feeding a gas to the at least one gas path 41, 42. Preferably, the gas fed to the at least one gas path 41, 42 is an inert gas, such as nitrogen or helium, or a mixture thereof.

With reference to FIG. 3, the coolant path 21 is at least partly provided on the first side 310 of a first bipolar plate 31' of the plurality of bipolar plates 31-31‴ and the at least one gas path 41 is at least partly provided on the second side 312 of the first bipolar plate 31'. In this example, the first bipolar plate 31' forms the oxidant path 41. In other examples, the bipolar plate may alternatively form the fuel path. Controlling the fluid pressure in the at least one gas path 41 may comprise controlling the fluid pressure in the at least one gas path 41 such that a differential pressure Δp, being the difference between the fluid pressure in the coolant path 21 provided on the first side 310 and the fluid pressure in the at least one gas path 41 provided on the second side 312, is below a differential pressure threshold.

A procedure of filling coolant to the coolant circuit 2 may firstly comprise generating a first fluid pressure in the coolant path 21 which is lower than an ambient pressure, followed by filling coolant to the coolant circuit 2 at a second fluid pressure in the coolant path 21 which is higher than the ambient pressure. By way of example, the first fluid pressure may be in a range of 5-200 mbar or 5-100 mbar, such as 10-20 mbar. As another example, the second fluid pressure may be in a range of 1.1-2 bar, such as 1.2-1.5 bar.

Controlling the fluid pressure in the at least one gas path 41, 42 may comprise controlling the fluid pressure in the at least one gas path 41, 42 in dependence on the second fluid pressure in the coolant path 21. In some examples, the fluid pressure in the at least one gas path 41, 42 during filling of coolant is controlled such that it corresponds to the second fluid pressure in the coolant path 21.

Controlling the fluid pressure in the at least one gas path 41, 42 may comprise ensuring that the fluid pressure in the at least one gas path 41, 42 is at the ambient pressure when there is a fluid pressure in the coolant path 21 which is lower than the ambient pressure. For example, it has been realized that the bipolar plates may be less sensitive for pressure levels which are below the ambient pressure than pressure levels which are above the ambient pressure. In other words, pressure levels below the ambient pressure may not cause as much strain in the bipolar plates than pressure levels above the ambient pressure, at least if the pressure levels are not too low. Hence, the pressure level in the at least one gas path 41, 42 may not necessarily need to be controlled in dependence on the first fluid pressure in the coolant path 21. In some examples, controlling the fluid pressure in the at least one gas path 41, 42 may comprise controlling the fluid pressure in the at least one gas path 41, 42 to be below the ambient pressure when there is a fluid pressure in the coolant path 21 which is lower than the ambient pressure. For example, if the fluid pressure in the coolant path 21 is lower than a fluid pressure vacuum threshold, such as 150 mbar or 100 mbar, the fluid pressure in the at least one gas path 41, 42 may be decreased to a level below the ambient pressure. Thereby, the risk of damaging the bipolar plate(s) may be reduced. In relation to this example, controlling the fluid pressure in the at least one gas path 41, 42 may comprise removing, such as suctioning, a gas from the at least one gas path 41, 42.

The method may further comprise obtaining information indicative of a fluid pressure level in the at least one gas path 41, 42 and/or indicative of a fluid pressure level in the coolant path 21. Accordingly, the fluid pressure in the at least one gas path 41, 42 during filling of coolant to the coolant circuit 2 may be controlled based on the information indicative of the fluid pressure level in the at least one gas path 41, 42 and/or indicative of the fluid pressure level in the coolant path 21.

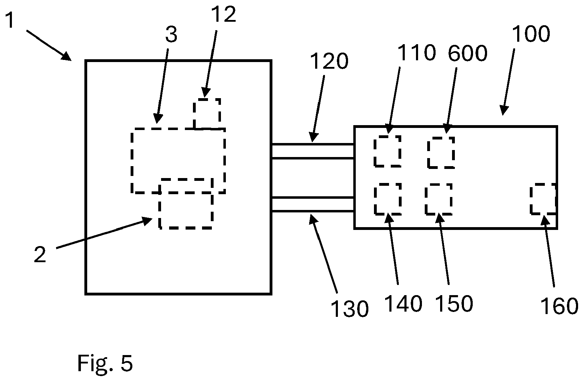

**FIG. 5** is an exemplary fuel cell system 1 and device 100 in a schematic view according to an example. The device 100 is configured to perform the method as disclosed herein, i.e. it is a device 100 for filling a coolant to a coolant circuit 2 of the fuel cell system 1. The fuel cell system 1 in FIG. 5 may be the fuel cell system 1 as e.g. shown in FIG. 1.

The fuel cell system 1 comprises a fuel cell stack 3 as e.g. shown in FIG. 2 and a coolant circuit 2. The coolant circuit 2 comprises a coolant path 21 which is provided in the fuel cell stack 3. The coolant circuit 2 is arranged to circulate coolant during operation of the fuel cell system 1. The circulation may be achieved by a fluid pump (not shown) of the fuel cell system 1. The coolant circuit 2 may be connected to a heat exchanger (not shown) which is configured to transfer heat from the coolant to e.g. an ambient environment during operation, and/or configured to transfer heat from the ambient environment to the coolant.

The device 100 comprises a first conduit 120 fluidly connectable to the coolant circuit 2, and a second conduit 130 fluidly connectable to the at least one gas path 41, 42. The first and/or second conduit 120, 130 may be a hose or a pipe.

In some examples, the device 100 is a portable unit which can be provided adjacent the fuel cell system 1 when there is a desire to fill the coolant circuit 2 with coolant.

The filling of coolant may be performed as part of a manufacturing process of the fuel cell system 1, as part of a manufacturing process of the vehicle 200, and/or the filling of coolant may be a re-filling process during service of the fuel cell system 1.

The device 100 is configured to, when the first conduit 120 is fluidly connected to the coolant circuit 2 and the second conduit 130 is fluidly connected to the at least one gas path 41, 42:
- fill coolant to the coolant circuit 2 via the first conduit 120, and
- during filling coolant to the coolant circuit 2, control a fluid pressure in the at least one gas path 41, 42 via the second conduit 130.

The device 100 may be configured to control the fluid pressure in the at least one gas path 41, 42 via the second conduit 130 by increasing the fluid pressure in the at least one gas path 41, 42. Additionally, or alternatively, the device 100 may be configured to control the fluid pressure in the at least one gas path 41, 42 via the second conduit 130 by decreasing the fluid pressure in the at least one gas path 41, 42.

The device 100 may be configured to increase the fluid pressure in the at least one gas path 41, 42 in response to a detected increased fluid pressure in the coolant path 21. Additionally, or alternatively, device 100 may be configured to decrease the fluid pressure in the at least one gas path 41, 42 in response to a detected decreased fluid pressure in the coolant path 21.

The second conduit 130 may be fluidly connectable to the fuel path 42 and/or to the oxidant path 41, and the device 100 may be configured to control the fluid pressure in at least one, preferably each one, of the fuel path 42 and the oxidant path 41 via the second conduit 130. In some examples, the second conduit 130 may comprise two sub-conduits (not shown), one for the oxidant path 41 and one for the fuel path 42.

The device 100 may be configured to control the fluid pressure in the at least one gas path 41, 42 via the second conduit 130 by feeding a gas to the at least one gas path 41, 42. For example, as mentioned in the above, the gas may be an inert gas.

The device 100 may be configured to fill coolant to the coolant circuit 2 via the first conduit 120 by a procedure of firstly generating a first fluid pressure in the coolant path 21 which is lower than an ambient pressure, followed by filling coolant to the coolant circuit 2 at a second fluid pressure in the coolant path 21 which is higher than the ambient pressure.

The device 100 may be configured to control the fluid pressure in the at least one gas path 41, 42 via the second conduit 130 in dependence on the second fluid pressure in the coolant path 21.

The device 100 may be configured to control the fluid pressure in the at least one gas path 41, 42 via the second conduit 130 by ensuring that the fluid pressure in the at least one gas path 41, 42 is at the ambient pressure when there is a fluid pressure in the coolant path 21 which is lower than the ambient pressure. Additionally, or alternatively, the device 100 may be configured to control the fluid pressure in the at least one gas path 41, 42 via the second conduit 130 by ensuring that the fluid pressure in the at least one gas path 41, 42 is below the ambient pressure when there is a fluid pressure in the coolant path 21 which is lower than the ambient pressure. In relation to this example, the device 100 may be configured to control the fluid pressure in the at least one gas path 41, 42 via the second conduit 130 by removing, such as suctioning, a gas from the at least one gas path 41, 42.

The device 100 may further be configured to obtain information indicative of a fluid pressure level in the at least one gas path 41, 42 and/or indicative of a fluid pressure level in the coolant path 21. For example, the obtained information may at least partly be received from at least one pressure sensor 12 of the fuel cell system 1. Additionally, or alternatively, the obtained information may at least partly be received from at least one pressure sensor 110 of the device 100 which is arranged to measure a pressure in the first and/or second conduit 120, 130.

The device 100 may further comprise at least one fluid pump 140 for generating a fluid pressure in the at least one gas path 41, 42 via the second conduit 130 and/or for pumping coolant from the device 100 to the coolant circuit 2 via the first conduit 120.

The device 100 may further comprise a storage 150, such as a tank, for storing coolant, and/or the device 100 may comprise an inlet 160 for receiving coolant from an external source.

The device 100 may further comprise a control unit 600, such as an electronic control unit, which is configured to control the operation of the device 100 such that coolant is filled to the fuel cell system 1 via the first conduit 120 according to examples of the method disclosed herein, while also controlling the fluid pressure in the at least one gas path 41, 42 via the second conduit 130. The control unit 600 may be communicatively connected to the fuel cell system 1, such as to the pressure sensor 12, to the at least one pressure sensor 110 and/or to the at least one fluid pump 140. The control unit 600 may be denoted a computer system.

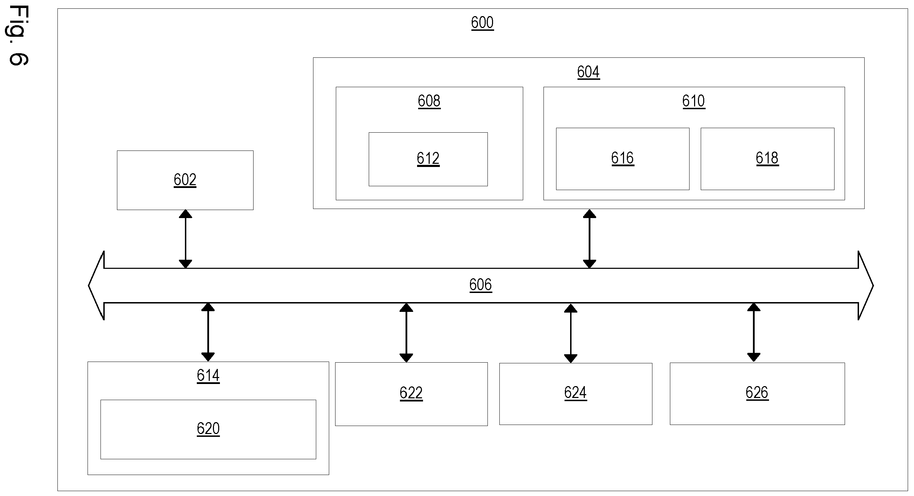

**FIG. 6** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface XX26 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, possible features and feature combinations of the present disclosure are presented as a list of Examples.

Example 1: A method for filling a coolant to a coolant circuit (2) of a fuel cell system (1), wherein the fuel cell system (1) comprises a fuel cell stack (3) and wherein the fuel cell stack (3) comprises a plurality of bipolar plates (31-31‴) and at least one membrane (32-32') located between two adjacent bipolar plates of the plurality of bipolar plates (31-31‴), wherein the plurality of bipolar plates (31-31‴) form a coolant path (21) of the coolant circuit (2) and wherein at least one gas path (41, 42) is formed between the at least one membrane (32-32') and a bipolar plate of the plurality of bipolar plates (31-31‴), the method comprising:
- filling (S1) coolant to the coolant circuit (2),
- during filling coolant to the coolant circuit (2), controlling (S2) a fluid pressure in the at least one gas path (41, 42).

Example 2: The method according to Example 1, wherein controlling the fluid pressure in the at least one gas path (41, 42) comprises increasing the fluid pressure in the at least one gas path (41, 42) and/or decreasing the fluid pressure in the at least one gas path (41, 42).

Example 3: The method according to Example 2, wherein the fluid pressure in the at least one gas path (41, 42) is increased in response to a detected increased fluid pressure in the coolant path (21) and/or decreased in response to a detected decreased fluid pressure in the coolant path (21).

Example 4: The method according to any one of the preceding Examples, wherein the at least one gas path (41, 42) comprises a fuel path (42) and an oxidant path (41), and wherein controlling the fluid pressure in the at least one gas path (41, 42) comprises controlling the fluid pressure in at least one, preferably each one, of the fuel path (42) and the oxidant path (41).

Example 5: The method according to any one of the preceding Examples, wherein controlling the fluid pressure in the at least one gas path (41, 42) comprises feeding a gas to the at least one gas path (41, 42) and/or removing a gas from the at least one gas path (41, 42).

Example 6: The method according to Example 5, wherein the gas fed to the at least one gas path (41, 42) is an inert gas, such as nitrogen or helium, or a mixture thereof.

Example 7: The method according to any one of the preceding Examples, wherein the coolant path (21) is at least partly provided on a first side (310) of a first bipolar plate (31') of the plurality of bipolar plates (31-31‴) and the at least one gas path (41) is at least partly provided on a second side (312) of the first bipolar plate (31'), the second side (312) being an opposite side to the first side (310), and wherein controlling the fluid pressure in the at least one gas path (41) comprises controlling the fluid pressure in the at least one gas path (41) such that a differential pressure (Δp), being the difference between the fluid pressure in the coolant path (21) provided on the first side (310) and the fluid pressure in the at least one gas path (41) provided on the second side (312), is below a differential pressure threshold.

Example 8: The method according any one of the preceding Examples, wherein a procedure of filling coolant to the coolant circuit (2) firstly comprises generating a first fluid pressure in the coolant path (21) which is lower than an ambient pressure, followed by filling coolant to the coolant circuit (2) at a second fluid pressure in the coolant path (21) which is higher than the ambient pressure.

Example 9: The method according to Example 8, wherein controlling the fluid pressure in the at least one gas path (41, 42) comprises controlling the fluid pressure in the at least one gas path (41, 42) in dependence on the second fluid pressure in the coolant path (21).

Example 10: The method according to any one of Examples 8 or 9, wherein controlling the fluid pressure in the at least one gas path (41, 42) comprises ensuring that the fluid pressure in the at least one gas path (41, 42) is at the ambient pressure when there is a fluid pressure in the coolant path (21) which is lower than the ambient pressure.

Example 11: The method according to any one of the preceding Examples, further comprising:
- obtaining information indicative of a fluid pressure level in the at least one gas path (41, 42) and/or indicative of a fluid pressure level in the coolant path (21).

Example 12: The method according to Example 11, wherein the obtained information is received from at least one pressure sensor (12) of the fuel cell system (1), and/or wherein the obtained information is received from at least one pressure sensor (110) of a device (100) for filling the coolant to the coolant circuit (2) of the fuel cell system (1).

Example 13: A device (100) for filling a coolant to a coolant circuit (2) of a fuel cell system (1), wherein the fuel cell system (1) comprises a fuel cell stack (3) and wherein the fuel cell stack (3) comprises a plurality of bipolar plates (31-31‴) and at least one membrane (32, 32') located between two adjacent bipolar plates of the plurality of bipolar plates (31, 31‴), wherein the plurality of bipolar plates (31-31‴) form a coolant path (21) of the coolant circuit (2) and wherein at least one gas path (41, 42) is formed between the at least one membrane (32-32') and a bipolar plate of the plurality of bipolar plates (31-31" '), the device (100) comprising a first conduit (120) fluidly connectable to the coolant circuit (2), and a second conduit (130) fluidly connectable to the at least one gas path (41, 42), and wherein the device (100) is configured to, when the first conduit (120) is fluidly connected to the coolant circuit (2) and the second conduit (130) is fluidly connected to the at least one gas path (41, 42):
- fill coolant to the coolant circuit (2) via the first conduit (120), and
- during filling coolant to the coolant circuit (2), control a fluid pressure in the at least one gas path (41, 42) via the second conduit (130).

Example 14: The device (100) according to Example 13, wherein the device (100) is configured to control the fluid pressure in the at least one gas path (41, 42) via the second conduit (130) by increasing the fluid pressure in the at least one gas path (41, 42) and/or by decreasing the fluid pressure in the at least one gas path (41, 42).

Example 15: The device according to Example 14, wherein the device (100) is configured to increase the fluid pressure in the at least one gas path (41, 42) in response to a detected increased fluid pressure in the coolant path (21) and/or decrease the fluid pressure in the at least one gas path (41, 42) in response to a detected decreased fluid pressure in the coolant path (21).

Example 16: The device (100) according to any one of Examples 13-15, wherein the at least one gas path (41, 42) comprises a fuel path (42) and an oxidant path (41), and wherein the second conduit (130) is fluidly connectable to the fuel path (42) and/or to the oxidant path (41), and wherein the device (100) is configured to control the fluid pressure in at least one, preferably each one, of the fuel path (42) and the oxidant path (41) via the second conduit (130).

Example 17: The device (100) according to any one of Examples 13-16, wherein the device (100) is configured to control the fluid pressure in the at least one gas path (41, 42) via the second conduit (130) by feeding a gas to the at least one gas path (41, 42) and/or by removing a gas from the at least one gas path (41, 42).

Example 18: The device (100) according to any one of Examples 13-17, wherein the device (100) is configured to fill coolant to the coolant circuit (2) via the first conduit (120) by a procedure of firstly generating a first fluid pressure in the coolant path (21) which is lower than an ambient pressure, followed by filling coolant to the coolant circuit (2) at a second fluid pressure in the coolant path (21) which is higher than the ambient pressure.

Example 19: The device (100) according to Example 18, wherein the device (100) is configured to control the fluid pressure in the at least one gas path (41, 42) via the second conduit (130) in dependence on the second fluid pressure in the coolant path (21).

Example 20: The device (100) according to any one of Examples 18 or 19, wherein the device (100) is configured to control the fluid pressure in the at least one gas path (41, 42) via the second conduit (130) by ensuring that the fluid pressure in the at least one gas path (41, 42) is at the ambient pressure when there is a fluid pressure in the coolant path (21) which is lower than the ambient pressure.

Example 21: The device (100) according to any one of Examples 13-20, wherein the device (100) is further configured to obtain information indicative of a fluid pressure level in the at least one gas path (41, 42) and/or indicative of a fluid pressure level in the coolant path (21).

Example 22: The device (100) according to Example 21, wherein the obtained information is at least partly received from at least one pressure sensor (12) of the fuel cell system (1), and/or wherein the obtained information is at least partly received from at least one pressure sensor (110) of the device (100) which is arranged to measure a pressure in the first and/or second conduit (120, 130).

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for filling a coolant to a coolant circuit (2) of a fuel cell system (1),
wherein the fuel cell system (1) comprises a fuel cell stack (3) and wherein the fuel cell stack (3) comprises a plurality of bipolar plates (31-31‴) and at least one membrane (32-32') located between two adjacent bipolar plates of the plurality of bipolar plates (31-31‴),
wherein the plurality of bipolar plates (31-31‴) form a coolant path (21) of the coolant circuit (2) and wherein at least one gas path (41, 42) is formed between the at least one membrane (32-32') and a bipolar plate of the plurality of bipolar plates (31-31‴),
the method comprising:
- filling (S1) coolant to the coolant circuit (2),
- during filling coolant to the coolant circuit (2), controlling (S2) a fluid pressure in the at least one gas path (41, 42).

2. The method according to claim 1, wherein controlling the fluid pressure in the at least one gas path (41, 42) comprises increasing the fluid pressure in the at least one gas path (41, 42) and/or decreasing the fluid pressure in the at least one gas path (41, 42).

3. The method according to claim 2, wherein the fluid pressure in the at least one gas path (41, 42) is increased in response to a detected increased fluid pressure in the coolant path (21) and/or decreased in response to a detected decreased fluid pressure in the coolant path (21).

4. The method according to any one of the preceding claims, wherein the at least one gas path (41, 42) comprises a fuel path (42) and an oxidant path (41), and wherein controlling the fluid pressure in the at least one gas path (41, 42) comprises controlling the fluid pressure in at least one, preferably each one, of the fuel path (42) and the oxidant path (41).

5. The method according to any one of the preceding claims, wherein controlling the fluid pressure in the at least one gas path (41, 42) comprises feeding a gas to the at least one gas path (41, 42) and/or removing a gas from the at least one gas path (41, 42).

6. The method according to claim 5, wherein the gas fed to the at least one gas path (41, 42) is an inert gas, such as nitrogen or helium, or a mixture thereof.

7. The method according to any one of the preceding claims, wherein the coolant path (21) is at least partly provided on a first side (310) of a first bipolar plate (31') of the plurality of bipolar plates (31-31‴) and the at least one gas path (41) is at least partly provided on a second side (312) of the first bipolar plate (31'), the second side (312) being an opposite side to the first side (310), and wherein controlling the fluid pressure in the at least one gas path (41) comprises controlling the fluid pressure in the at least one gas path (41) such that a differential pressure (Δp), being the difference between the fluid pressure in the coolant path (21) provided on the first side (310) and the fluid pressure in the at least one gas path (41) provided on the second side (312), is below a differential pressure threshold.

8. The method according any one of the preceding claims, wherein a procedure of filling coolant to the coolant circuit (2) firstly comprises generating a first fluid pressure in the coolant path (21) which is lower than an ambient pressure, followed by filling coolant to the coolant circuit (2) at a second fluid pressure in the coolant path (21) which is higher than the ambient pressure.

9. The method according to claim 8, wherein controlling the fluid pressure in the at least one gas path (41, 42) comprises controlling the fluid pressure in the at least one gas path (41, 42) in dependence on the second fluid pressure in the coolant path (21).

10. The method according to any one of claims 8 or 9, wherein controlling the fluid pressure in the at least one gas path (41, 42) comprises ensuring that the fluid pressure in the at least one gas path (41, 42) is at the ambient pressure when there is a fluid pressure in the coolant path (21) which is lower than the ambient pressure.

11. The method according to any one of the preceding claims, further comprising:
- obtaining information indicative of a fluid pressure level in the at least one gas path (41, 42) and/or indicative of a fluid pressure level in the coolant path (21).

12. The method according to claim 11, wherein the obtained information is received from at least one pressure sensor (12) of the fuel cell system (1), and/or wherein the obtained information is received from at least one pressure sensor (110) of a device (100) for filling the coolant to the coolant circuit (2) of the fuel cell system (1).

13. A device (100) for filling a coolant to a coolant circuit (2) of a fuel cell system (1),
wherein the fuel cell system (1) comprises a fuel cell stack (3) and wherein the fuel cell stack (3) comprises a plurality of bipolar plates (31-31‴) and at least one membrane (32, 32') located between two adjacent bipolar plates of the plurality of bipolar plates (31, 31‴),
wherein the plurality of bipolar plates (31-31‴) form a coolant path (21) of the coolant circuit (2) and wherein at least one gas path (41, 42) is formed between the at least one membrane (32-32') and a bipolar plate of the plurality of bipolar plates (31-31" '),
the device (100) comprising a first conduit (120) fluidly connectable to the coolant circuit (2), and a second conduit (130) fluidly connectable to the at least one gas path (41, 42), and
wherein the device (100) is configured to, when the first conduit (120) is fluidly connected to the coolant circuit (2) and the second conduit (130) is fluidly connected to the at least one gas path (41, 42):
- fill coolant to the coolant circuit (2) via the first conduit (120), and
- during filling coolant to the coolant circuit (2), control a fluid pressure in the at least one gas path (41, 42) via the second conduit (130).

14. The device (100) according to claim 13, wherein the device (100) is configured to control the fluid pressure in the at least one gas path (41, 42) via the second conduit (130) by increasing the fluid pressure in the at least one gas path (41, 42) and/or by decreasing the fluid pressure in the at least one gas path (41, 42).

15. The device according to claim 14, wherein the device (100) is configured to increase the fluid pressure in the at least one gas path (41, 42) in response to a detected increased fluid pressure in the coolant path (21) and/or decrease the fluid pressure in the at least one gas path (41, 42) in response to a detected decreased fluid pressure in the coolant path (21).
